# DEMANDE DE BREVET EUROPEEN

(11) **EP 4 786 335 A1**
(43) Date de publication de la demande: **05.08.2026**
(21) Numéro de dépôt: 26155670.8
(22) Date de dépôt: 02.02.2026
(51) Int. Cl.: B64D 27/40

(54) **SYSTÈME DE PROPULSION POUR AÉRONEF COMPORTANT UN MÂT RÉACTEUR, UN TURBORÉACTEUR ET DES MOYENS DE FIXATION DU TURBORÉACTEUR AU MÂT**

(30) Priorité: 04.02.2025 FR 2501146
(71) Demandeur: Airbus Operations (S.A.S.), 31060 Toulouse Cedex 9 (FR)
(72) Inventeur: GUENEAU, Germain, 31060 Toulouse (FR); COMBES, Pierre-Antoine, 31060 Toulouse (FR); CHARTON, Nicolas, 31060 Toulouse (FR)
(74) Mandataire: Cabinet Le Guen Maillet

(57) **Abrégé**

L'invention concerne un système de propulsion (100) pour aéronef comportant un mât réacteur (102) avec un nez (102a), un turboréacteur (104) présentant un carter (104a), une manille centrale (110a-b) fixée de manière articulée au nez (102a) par un premier point de liaison (112a) et fixée de manière articulée au carter (104a) par deux deuxièmes points de liaison (112b-c), et une manille latérale (116) fixée de manière articulée entre le nez (102a) et le carter (104a) par un point de liaison centrale (118a) et deux points de liaison latérale (118b) disposés de part et d'autre d'un plan médian vertical (P).

Avec un tel arrangement, le montage du turboréacteur 104 au mât réacteur 102 est simplifié

## Description

### DOMAINE TECHNIQUE

La présente invention concerne un système de propulsion pour aéronef, où le système de propulsion comporte un turboréacteur, un mât réacteur et des moyens de fixation assurant la fixation du turboréacteur au mât réacteur, ainsi qu'un aéronef comportant un tel système de propulsion.

### ÉTAT DE LA TECHNIQUE ANTÉRIEURE

Un aéronef comporte classiquement une pluralité de systèmes de propulsion. Chaque système de propulsion est généralement fixé sous une aile de l'aéronef et il comporte un mât réacteur fixé sous l'aile, un turboréacteur et des moyens de fixation qui assurent la fixation du turboréacteur sous le mât réacteur.

Bien que les systèmes de propulsion actuels donnent satisfaction, le montage et le démontage des moyens de fixation sont généralement longs et complexes et il est souhaitable de trouver un arrangement qui diminue le temps d'installation et la complexité.

Les documents EP-A-4 488 178, FR-A-3 098 793, US-A-2015/122943, EP-A-4 087 784 et EP-A-4 484 298 divulguent des systèmes de propulsion de l'état de la technique.

### EXPOSÉ DE L'INVENTION

Un objet de la présente invention est de proposer un système de propulsion pour aéronef comportant un turboréacteur, un mât réacteur et des moyens de fixation assurant la fixation du turboréacteur au mât réacteur et dont le montage/démontage est facilité.

À cet effet, est proposé un système de propulsion pour un aéronef comportant :
- un mât réacteur avec un nez,
- un turboréacteur présentant un carter s'étendant le long d'une direction longitudinale et présentant un plan médian vertical,
- au moins une manille centrale inscrite dans un plan parallèle au plan médian vertical, fixée de manière articulée au nez par un premier point de liaison et fixée de manière articulée au carter par deux deuxièmes points de liaison, et
- une manille latérale fixée de manière articulée entre le nez et le carter par un point de liaison centrale et deux points de liaison latérale disposés de part et d'autre du plan médian vertical. Avec un tel système le montage du turboréacteur au mât réacteur est simplifié.

Selon un mode de réalisation particulier, il y a une manille centrale disposée au niveau du plan médian vertical.

Avantageusement, le système de propulsion comporte deux manilles complémentaires disposées de part et d'autre du plan médian vertical, où chaque manille complémentaire est inscrite dans un plan parallèle au plan médian vertical et est fixée de manière articulée au nez par le premier point de liaison, et est fixée de manière articulée au carter par les deux deuxièmes points de liaison. Avantageusement, le nez est constitué de deux ferrures disposées de part et d'autre du plan médian vertical, chaque ferrure présente une extension extérieure et une extension intérieure, la première extension et la deuxième extension de chaque ferrure forment ensemble une chape femelle dans laquelle la manille complémentaire qui est du même côté du plan médian vertical est montée pour former le premier point de liaison, et les deux extensions intérieures forment ensemble une chape femelle dans laquelle la manille centrale est montée pour former le premier point de liaison. Selon un autre mode de réalisation particulier, il y a deux manilles centrales disposées de part et d'autre du plan médian vertical.

Avantageusement, le nez est constitué de deux ferrures disposées de part et d'autre du plan médian vertical, chaque ferrure présente une extension accolée à l'extension de l'autre ferrure, où les extensions forment ensemble une chape mâle et les deux manilles centrales forment ensemble une chape femelle dans laquelle la chape mâle est montée pour former le premier point de liaison. Selon une variante, le point de liaison centrale assure la fixation entre le nez et la manille latérale et chaque point de liaison latérale assure la fixation entre le carter et la manille latérale. Avantageusement, lorsque le nez est constitué de deux ferrures, chaque ferrure présente une extension avant et une extension arrière, les deux extensions avant forment ensemble une paroi d'une chape femelle centrale, les deux extensions arrière forment ensemble l'autre paroi de la chape femelle centrale, et la manille latérale forme une chape mâle centrale montée dans la chape femelle centrale pour former le point de liaison centrale.

Selon une autre variante, le point de liaison centrale assure la fixation entre le carter et la manille latérale, et chaque point de liaison latérale assure la fixation entre le nez et la manille latérale.

Avantageusement, le premier point de liaison et les deux deuxièmes points de liaison forment chacun au moins une liaison pivot dont l'axe est perpendiculaire au plan médian vertical, et le point de liaison centrale et les deux points de liaison latérale forment chacun au moins une liaison pivot dont l'axe est parallèle à la direction longitudinale.

L'invention propose également un aéronef comportant un système de propulsion selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue en perspective d'un système de propulsion selon un premier mode de réalisation de l'invention,
Fig. 3 est une vue en perspective du système de propulsion selon le premier mode de réalisation de l'invention, où des pièces ont été retirées,
Fig. 4 est une vue de face du système de propulsion selon le premier mode de réalisation,
Fig. 5 montre un détail du système de propulsion selon le premier mode de réalisation,
Fig. 6 est une vue de face du système de propulsion selon un deuxième mode de réalisation de l'invention, et
Fig. 7 est une vue en perspective d'un système de propulsion selon un troisième mode de réalisation de l'invention.

### EXPOSÉ DÉTAILLÉ DE MODES DE RÉALISATION

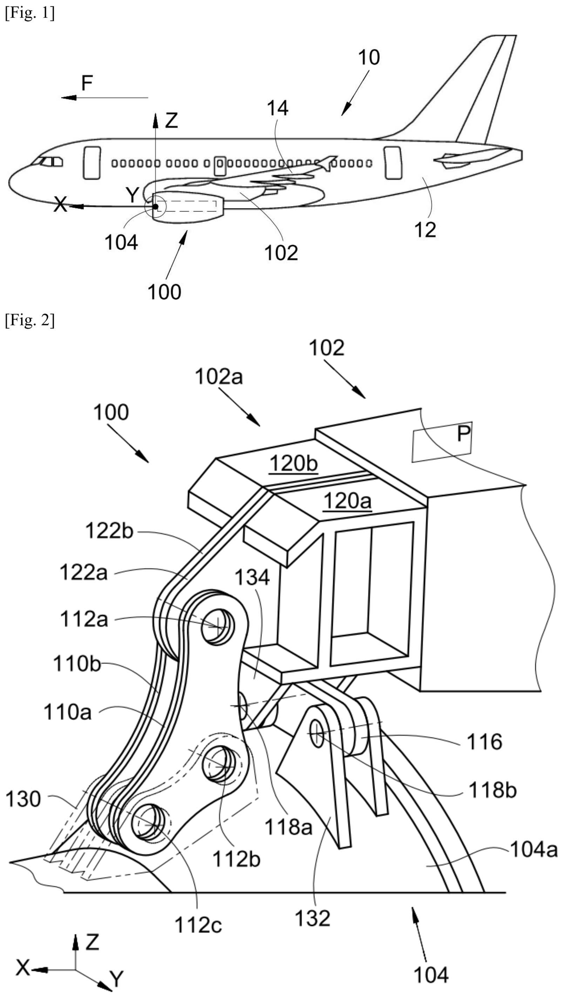

La Fig. 1 montre un aéronef 10 qui comporte un système de propulsion 100 selon l'invention. L'aéronef 10 comporte de part et d'autre d'un fuselage 12, une aile 14 à laquelle est fixé un mât réacteur 102. Le système de propulsion 100 comporte le mât réacteur 102 et un turboréacteur 104.

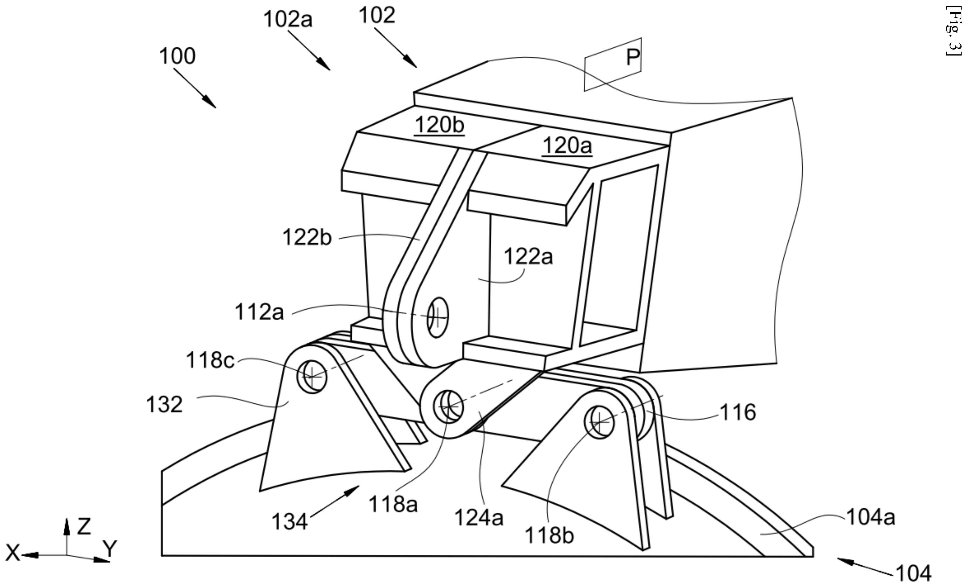

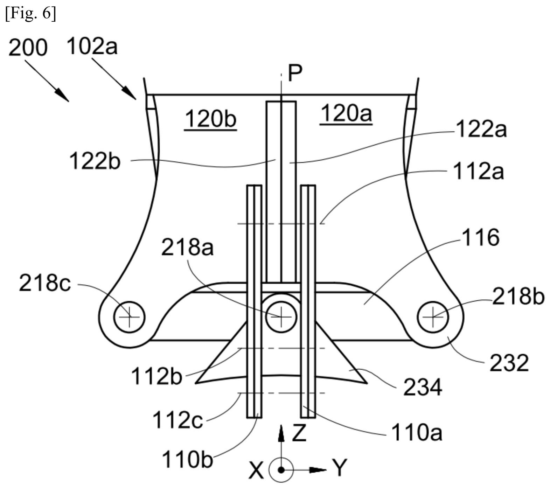

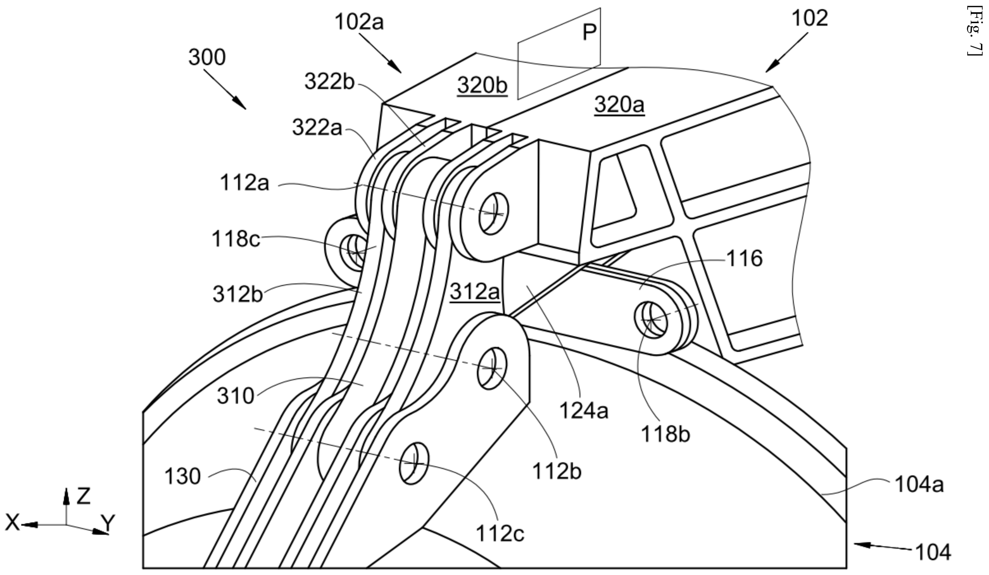

Les Figs. 2 à 5 montrent un système de propulsion 100 selon un premier mode de réalisation de l'invention, la Fig. 6 montre un système de propulsion 200 selon un deuxième mode de réalisation de l'invention et la Fig. 7 montre un système de propulsion 300 selon un troisième mode de réalisation de l'invention.

Le système de propulsion 100, 200, 300 comporte également des moyens de fixation qui assurent la fixation du turboréacteur 104 au mât réacteur 102.

Dans la description qui suit, les termes relatifs à une position sont pris en référence à un aéronef en position normale de vol, c'est-à-dire comme il est représenté sur la Fig. 1 et les positions «avant » et « arrière » sont prises par rapport à l'avant et l'arrière du turboréacteur et par rapport à la direction d'avancement F de l'aéronef 10 lorsque le turboréacteur 104 fonctionne.

Dans la description qui suit, et par convention, on appelle X, la direction longitudinale du turboréacteur 104 qui est parallèle à l'axe longitudinal du turboréacteur 104, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

Le turboréacteur 102 présente une forme de révolution autour de son axe longitudinal et il comporte un carter 104a qui s'étend ainsi le long de la direction longitudinale X et qui présente un plan médian vertical P (XZ). Le système de propulsion 100, 200, 300 est globalement symétrique par rapport au plan médian vertical P.

Le mât réacteur 102 présente un nez 102a qui s'étend à l'avant du mât réacteur 102.

Le système de propulsion 100,200, 300 comporte au moins une manille centrale 110a-b, 310 inscrite dans un plan parallèle au plan médian vertical P. Ladite au moins une manille centrale 110a-b, 310 est fixée de manière articulée au nez 102a par un premier point de liaison 112a et elle est fixée de manière articulée au carter 104a par deux deuxièmes points de liaison 112b-c. On dit que la fixation est articulée car les points de liaison forment des articulations même si la présence des deux points de liaisons 112b-c verrouillent l'articulation.

Le système de propulsion 100,200, 300 comporte également une manille latérale 116 qui est fixée de manière articulée entre le nez 102a et le carter 104a par un point de liaison centrale 118a, 218a et par deux points de liaison latérale 118b-c, 218b-c. Les deux points de liaison latérale 118b-c, 218b-c sont disposés de part et d'autre du plan médian vertical P et préférentiellement symétriquement par rapport au plan médian vertical P.

Avec un tel arrangement, le montage du turboréacteur 104 au mât réacteur 102 est simplifié car il suffit de mettre en place les points de liaison décrits et il n'y a pas forcément besoin de mettre en place des manilles de poussée fixées entre l'arrière du mât réacteur 102 et le turboréacteur 104. Les différents points de liaison prennent la forme de liaison du type chape, ce qui permet de réaliser les points de liaison uniquement par mise en place d'un axe de liaison entre une chape mâle et une chape femelle.

Chaque manille centrale 110a-b, 310 prend globalement la forme d'une plaque plate de forme triangulaire avec un point de liaison 112a-c à chaque coin.

La fixation de la manille centrale 110a-b, 310 au carter 104a du turboréacteur 104 s'effectue par l'intermédiaire de chapes centrales femelles 130 solidaires du carter 104a où il y a une chape centrale femelle 130 par manille centrale 110a-b, 310, celle-ci formant une chape mâle logée dans la chape centrale femelle 130 et fixée articulée par la mise en place d'un axe traversant les chapes centrales femelles 130 et la/les manille(s) centrale(s) 110a-b, 310 à travers des alésages prévus à cet effet pour réaliser une liaison chape.

Parmi les deux deuxièmes points de liaison 112b-c, il y a un deuxième point de liaison arrière 112b et un deuxième point de liaison avant 112c disposé à l'avant par rapport au deuxième point de liaison arrière 112b.

La manille latérale 116 est fixée au niveau du point de liaison centrale 118a, 218a et de chaque point de liaison latérale 118b-c, 218b-c par des liaisons du type chape où la manille latérale 116 constitue la chape mâle logée et montée articulée dans une chape femelle par mise en place d'un axe traversant les chapes. L'axe de chaque liaison chape est ici parallèle à la direction longitudinale X.

L'axe du point de liaison centrale 118a, 218a est inclus dans le plan médian vertical P et les axes des points de liaison latérale 118b-c, 218b-c sont disposés symétriquement de part et d'autre du plan médian vertical P.

La longueur de la manille latérale 116 qui s'étend entre les points de liaison latérale 118b-c, 218b-c est perpendiculaire au plan médian vertical P.

Les efforts en X et en Y sont repris par la ou chaque manille centrale 110a-b, 310 et les efforts en Y sont repris par la manille latérale 116.

Pour des raisons de sécurité, la manille latérale 116 est ici double, c'est-à-dire qu'elle est constituée de deux sous-manilles identiques et accolées l'une à l'autre.

Dans le premier et le deuxième modes de réalisation représentés ici, il y a deux manilles centrales 110a-b qui sont disposées de part et d'autre du plan médian vertical P.

Pour des raisons de sécurité, dans le premier et le deuxième modes de réalisation, le nez 102a est constitué de deux ferrures 120a-b qui sont indépendantes l'une de l'autre et qui sont disposées de part et d'autre du plan médian vertical P. Chaque ferrure 120a-b présente une extension 122a-b qui s'étend vers l'avant du nez 102a et qui est accolée à l'extension 122b-a de l'autre ferrure 120b-a, c'est-à-dire le long du plan médian vertical P.

Les extensions 122a-b forment ainsi ensemble une chape mâle et les deux manilles centrales 110a-b forment ensemble une chape femelle dans laquelle la chape mâle est montée articulée pour former le premier point de liaison 112a. À cette fin, un axe traversant est inséré dans les chapes à travers des alésages prévus à cet effet pour réaliser la liaison chape du premier point de liaison 112a.

Pour des raisons de sécurité, chaque manille centrale 110a-b est ici double, c'est-à-dire qu'elle est constituée de deux sous-manilles identiques et accolées l'une à l'autre.

Les deux sous-manilles formant une manille centrale 110a-b sont logées dans une chape centrale femelle 130 et forment une paroi de la chape femelle du premier point de liaison 112a.

Dans le troisième mode de réalisation, il y a une manille centrale 310 disposée au niveau du plan médian vertical P et pour des raisons de sécurité, le système de propulsion 300 comporte également deux manilles complémentaires 312a-b qui sont disposées de part et d'autre du plan médian vertical P.

Chaque manille complémentaire 312a-b est ainsi inscrite dans un plan parallèle au plan médian vertical P et elle est fixée de manière articulée au nez 102a par le premier point de liaison 112a, et de manière articulée au carter 104a par les deux deuxièmes points de liaison 112b-c. Chaque manille complémentaire 312a-b reprend donc une forme et une implantation similaires à celles de la manille centrale 310.

Pour des raisons de sécurité, dans le troisième mode de réalisation, le nez 102a est constitué de deux ferrures 320a-b qui sont indépendantes l'une de l'autre et qui sont disposées de part et d'autre du plan médian vertical P. Chaque ferrure 320a-b présente vers l'avant du nez 102a, une extension extérieure 322a et une extension intérieure 322b. Les extensions intérieures 322b des deux ferrures 320a-b se retrouvent ainsi en regard l'une de l'autre et de part et d'autre du plan médian vertical P et chaque extension extérieure 322a se retrouve à l'extérieur de l'extension intérieure 322b associée. L'extension intérieure 322b est plus près du plan médian vertical P que l'extension extérieure 322a associée.

La première extension 322a et la deuxième extension 322b de chaque ferrure 320a-b forment ensemble une chape femelle dans laquelle la manille complémentaire 312a-b qui est du même côté du plan médian vertical P est montée pour former le premier point de liaison 112a et les deux extensions intérieures 322b sont distantes l'une de l'autre et forment ensemble une chape femelle dans laquelle la manille centrale 310 est montée pour former le premier point de liaison 112a.

À cette fin, un axe est logé, traversant les extensions 322a-b et les manilles complémentaires 312a-b et la manille centrale 310 à travers des alésages prévus à cet effet pour réaliser la liaison chape du premier point de liaison 112a.

Les manilles complémentaires 312a-b et la manille centrale 310 sont chacune logées dans une chape centrale femelle 130.

Le premier et le troisième modes de réalisation montrent un premier arrangement particulier pour la manille latérale 116 et le deuxième mode de réalisation montre un deuxième arrangement particulier pour la manille latérale 116. Il est également possible d'associer le troisième mode de réalisation avec le deuxième arrangement particulier.

Dans le premier arrangement particulier, le point de liaison centrale 118a assure la fixation entre le nez 102a et la manille latérale 116 et chaque point de liaison latérale 118b-c assure la fixation entre le carter 104a et la manille latérale 116.

Le nez 102a comporte ainsi une chape femelle centrale 134 dans laquelle loge la manille latérale 116 et où un axe est logé, traversant la manille latérale 116 et la chape femelle centrale 134 à travers des alésages prévus à cet effet pour réaliser la liaison chape du point de liaison centrale 118a.

Le carter 104a présente de part et d'autre du plan médian vertical P, une chape femelle latérale 132 dans laquelle loge la manille latérale 116 et où un axe est logé traversant la manille latérale 116 et la chape femelle latérale 132 à travers des alésages prévus à cet effet pour réaliser la liaison chape de chaque point de liaison latérale 118b-c.

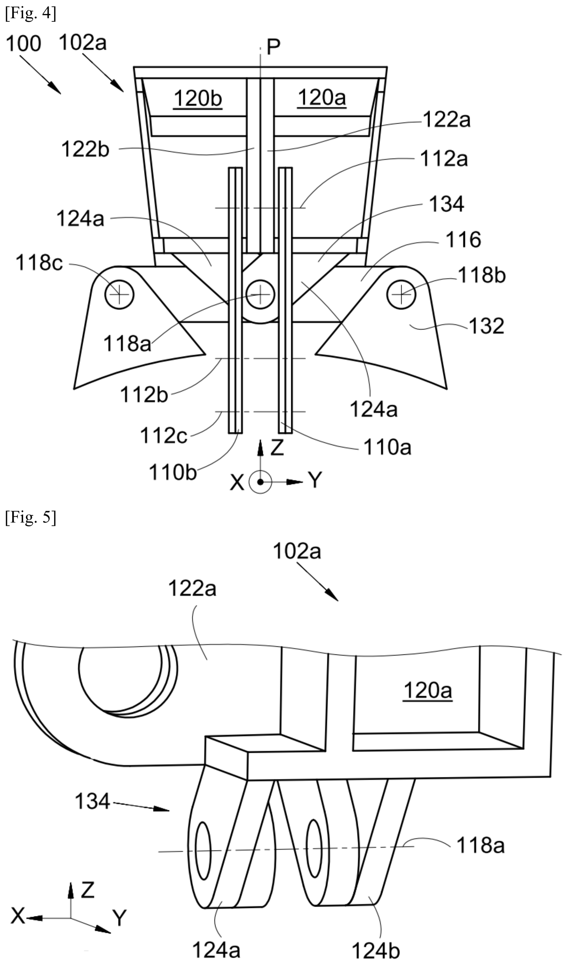

Dans ce premier arrangement, qui est mieux vu sur la Fig. 5, lorsque le nez 102a est constitué des deux ferrures 120a-b, 320a-b, chaque ferrure 120a-b, 320a-b présente une extension avant 124a et une extension arrière 124b. Chaque extension 124a-b s'étend vers le carter 104a et l'extension avant 124a est disposée à l'avant par rapport à l'extension arrière 124b.

Dans le mode de réalisation particulier représenté sur la Fig. 5, l'extension avant 124a de la ferrure bâbord 120a est disposée à l'avant par rapport à l'extension avant 124a de la ferrure tribord 120b, et l'extension arrière 124b de la ferrure tribord 120b est disposée à l'avant par rapport à l'extension arrière 124b de la ferrure bâbord 120a. Les deux extensions avant 124a sont à l'avant par rapport aux deux extensions arrière 124b.

Les deux extensions avant 124a peuvent être accolées l'une à l'autre et les deux extensions arrière 124b peuvent être accolées l'une à l'autre. Il y a un espace entre les deux extensions avant 124a et les deux extensions arrière 124b pour former la chape femelle centrale 134. Selon un mode alternatif, les deux extensions avant 124a, respectivement les deux extensions arrière 124b ne sont pas accolées l'une à l'autre.

Les deux extensions avant 124a forment ainsi ensemble une paroi de la chape femelle centrale 134 et les deux extensions arrière 124b forment ainsi ensemble l'autre paroi de la chape femelle centrale 134. La manille latérale 116 forme la chape mâle centrale et est montée dans la chape femelle centrale 134 par l'intermédiaire d'un axe traversant la manille latérale 116 et chaque extension 124a-b à travers des alésages prévus à cet effet pour former le point de liaison centrale 118a.

Dans le deuxième arrangement qui est mieux vu sur la Fig. 6, le point de liaison centrale 218a assure la fixation entre le carter 104a et la manille latérale 116 et chaque point de liaison latérale 218b-c assure la fixation entre le nez 102a et la manille latérale 116.

Le nez 102a comporte ainsi pour chaque point de liaison latérale 218b-c, de part et d'autre du plan médian vertical P, une chape femelle latérale 232 dans laquelle loge la manille latérale 116, et où un axe est logé, traversant la manille latérale 116 et la chape femelle latérale 232 à travers des alésages prévus à cet effet pour réaliser la liaison chape de chaque point de liaison latérale 218b-c. Le carter 104a présente une chape femelle centrale 234 dans laquelle loge la manille latérale 116 et où un axe est logé, traversant la manille latérale 116 et la chape femelle centrale 234 à travers des alésages prévus à cet effet pour réaliser la liaison chape du point de liaison centrale 218a. Dans le deuxième mode de réalisation de l'invention, le premier point de liaison 112a et les deux deuxièmes points de liaison 112b-c forment chacun une liaison pivot dont l'axe de rotation est perpendiculaire au plan médian vertical P.

Dans le premier et troisième modes de réalisation de l'invention, le premier point de liaison 112a et les deux deuxièmes points de liaison 112b-c forment chacun une liaison pivot dont l'axe de rotation est perpendiculaire au plan médian vertical P mais préférentiellement, une liaison rotule. Les manilles complémentaires 312a-b constituent alors des manilles de sécurité en attente qui ne deviennent actives que dans le cas d'une défaillance de la manille centrale 310 constituant le chemin principal d'effort. L'axe de la liaison chape du premier point de liaison 112a est ainsi monté avec jeu dans les alésages associés aux manilles complémentaires 312a-b et par une liaison rotule dans l'alésage associé à la manille centrale 310.

Dans chacun des modes de réalisation, le point de liaison centrale 118a, 218a et les deux points de liaison latérale 118b-c, 218b-c forment chacun au moins une liaison pivot dont l'axe est parallèle à la direction longitudinale X, mais préférentiellement, le point de liaison centrale 118a, 218a et l'un des deux points de liaison latérale 118b-c, 218b-c forment une liaison rotule. L'autre point de liaison latérale 118c-b, 218c-b constitue alors un point de sécurité en attente qui ne devient actif que dans le cas d'une défaillance du chemin principal d'effort. L'axe dudit autre point de liaison latérale 118c-b, 218c-b est ainsi monté avec jeu dans les alésages associés. D'une manière générale, pour des raisons de sécurité, l'axe de chaque liaison chape peut être doublé et comporter ainsi un axe intérieur logé dans un axe extérieur creux.

## Revendications

1. Système de propulsion (100, 200, 300) pour un aéronef (10) comportant :
- un mât réacteur (102) avec un nez (102a),
- un turboréacteur (104) présentant un carter (104a) s'étendant le long d'une direction longitudinale (X) et présentant un plan médian vertical (P),
- au moins une manille centrale (110a-b, 310) inscrite dans un plan parallèle au plan médian vertical (P), fixée de manière articulée au nez (102a) par un premier point de liaison (112a), et
- une manille latérale (116),
ladite au moins une manille centrale (110a-b, 310) étant fixée de manière articulée au carter (104a) par deux deuxièmes points de liaison (112b-c), et en ce que la manille latérale (116) est fixée de manière articulée entre le nez (102a) et le carter (104a) par un point de liaison centrale (118a, 218a) et deux points de liaison latérale (118b-c, 218b-c) disposés de part et d'autre du plan médian vertical (P).

2. Système de propulsion (300) selon la revendication 1, **caractérisé en ce qu'**il y a une manille centrale (310) disposée au niveau du plan médian vertical (P).

3. Système de propulsion (300) selon la revendication 2, **caractérisé en ce qu'**il comporte deux manilles complémentaires (312a-b) disposées de part et d'autre du plan médian vertical (P), où chaque manille complémentaire (312a-b) est inscrite dans un plan parallèle au plan médian vertical (P), et est fixée de manière articulée au nez (102a) par le premier point de liaison (112a), et est fixée de manière articulée au carter (104a) par les deux deuxièmes points de liaison (112b-c).

4. Système de propulsion (300) selon la revendication 3, **caractérisé en ce que** le nez (102a) est constitué de deux ferrures (320a-b) disposées de part et d'autre du plan médian vertical (P), **en ce que** chaque ferrure (320a-b) présente une extension extérieure (322a) et une extension intérieure (322b), **en ce que** la première extension (322a) et la deuxième extension (322b) de chaque ferrure (320a-b) forment ensemble une chape femelle dans laquelle la manille complémentaire (312a-b) qui est du même côté du plan médian vertical (P) est montée pour former le premier point de liaison (112a), et **en ce que** les deux extensions intérieures (322b) forment ensemble une chape femelle dans laquelle la manille centrale (310) est montée pour former le premier point de liaison (112a).

5. Système de propulsion (100, 200) selon la revendication 1, **caractérisé en ce qu'**il y a deux manilles centrales (110a-b) disposées de part et d'autre du plan médian vertical (P).

6. Système de propulsion (100, 200) selon la revendication 5, **caractérisé en ce que** le nez (102a) est constitué de deux ferrures (120a-b) disposées de part et d'autre du plan médian vertical (P), **en ce que** chaque ferrure (120a-b) présente une extension (122a-b) accolée à l'extension (122b-a) de l'autre ferrure (120b-a), où les extensions (122a-b) forment ensemble une chape mâle et **en ce que** les deux manilles centrales (110a-b) forment ensemble une chape femelle dans laquelle la chape mâle est montée pour former le premier point de liaison (112a).

7. Système de propulsion (100, 300) selon l'une des revendications 1 à 6, **caractérisé en ce que** le point de liaison centrale (118a) assure la fixation entre le nez (102a) et la manille latérale (116) et **en ce que** chaque point de liaison latérale (118b-c) assure la fixation entre le carter (104a) et la manille latérale (116).

8. Système de propulsion (100, 300) selon la revendication 7 lorsqu'elle dépend de la revendication 3 ou de la revendication 6, **caractérisé en ce que** chaque ferrure (120a-b, 320a-b) présente une extension avant (124a) et une extension arrière (124b), **en ce que** les deux extensions avant (124a) forment ensemble une paroi d'une chape femelle centrale (134), **en ce que** les deux extensions arrière (124b) forment ensemble l'autre paroi de la chape femelle centrale (134), et **en ce que** la manille latérale (116) forme une chape mâle centrale montée dans la chape femelle centrale (134) pour former le point de liaison centrale (118a).

9. Système de propulsion (200) selon l'une des revendications 1 à 6, **caractérisé en ce que** le point de liaison centrale (218a) assure la fixation entre le carter (104a) et la manille latérale (116) et **en ce que** chaque point de liaison latérale (218b-c) assure la fixation entre le nez (102a) et la manille latérale (116).

10. Système de propulsion (100, 200, 300) selon l'une des revendications précédentes, **caractérisé en ce que** le premier point de liaison (112a) et les deux deuxièmes points de liaison (112b-c) forment chacun au moins une liaison pivot dont l'axe est perpendiculaire au plan médian vertical (P), et **en ce que** le point de liaison centrale (118a, 218a) et les deux points de liaison latérale (118b-c, 218b-c) forment chacun au moins une liaison pivot dont l'axe est parallèle à la direction longitudinale (X).

11. Aéronef (10) comportant un système de propulsion (100) selon l'une des revendications précédentes.
